# EUROPEAN PATENT SPECIFICATION

(11) **EP 1 973 725 B1**
(45) Date of publication and mention of the grant of the patent: **26.10.2011**
(21) Application number: 05850984.5
(22) Date of filing: 23.12.2005
(51) Int. Cl.: B29D 30/50

(54) **METHODS OF MANUFACTURING A TYRE BEAD AND A TYRE AND AN APPARATUS THEREFOR**
VERFAHREN ZUR HERSTELLUNG EINER REIFENWULST UND EINES REIFENS UND VORRICHTUNG DAFÜR
PROCEDES DE FABRICATION D'UN TALON DE PNEU ET D'UN PNEU ET APPAREIL POUR LA MISE EN OEUVRE DE CES PROCEDES

(43) Date of publication of application: 01.10.2008
(73) Proprietor: PIRELLI TYRE S.p.A., 20126 Milano (IT)
(72) Inventor: LO PRESTI, Gaetano, I-20126 Milano (IT); BARZAGHI, Antonio Alessandro, I-20126 Milano (IT); SEVERINI, Claudio, I-20126 Milano (IT); NOTO, Rodolfo, I-20126 Milano (IT)
(74) Representative: Castiglia, Paolo
(86) International application number: PCT/IT2005/000763
(87) International publication number: WO 2007/072520

(56) References cited:
- EP-A- 1 060 872
- US-A- 1 246 260
- US-A- 2 974 890
- US-A- 3 296 784
- US-A- 3 718 523
- US-A- 4 097 321
- DATABASE WPI Section Ch, Week 198233 Derwent Publications Ltd., London, GB; Class A35, AN 1982-69914E XP002394074 -& SU 874 387 A1 (TYRE IND RES INST) 23 October 1981 (1981-10-23)

## Description

The present invention relates to a method for manufacturing a tyre for vehicle wheels.

Preferably, but not exclusively, the tyre manufactured with the method of the present invention is a tyre for trucks.

The invention also relates to a method for manufacturing an annular anchoring structure of a tyre for vehicle wheels and an apparatus for making such an annular anchoring structure.

A tyre for vehicle wheels generally comprises a carcass structure comprising at least one carcass ply formed from reinforcement cords incorporated in an elastomeric matrix. The carcass ply has end flaps respectively engaged with annular anchoring structures, arranged in the areas usually identified with the name "beads" and normally each formed from a substantially circumferential annular insert on which at least one filler is applied, in a radially outer position thereof. Such annular structures are commonly referred to as "bead cores" and have the task of keeping the tyre well fixed to the anchoring seat specifically provided in the rim of the wheel, thus avoiding the radially inner end edge of the tyre coming out from such a seat in operation.

In a radially outer position with respect to the carcass structure a belt structure comprising one or more belt layers is associated, said belt layers being arranged radially one on top of the other and having textile or metallic reinforcement cords with crossed orientation and/or an orientation substantially parallel to the direction of circumferential extension of the tyre.

Between the carcass structure and the belt structure a layer of elastomeric material can be provided, known as "underbelt", having the function of making the radially outer surface of the carcass structure as uniform as possible for the subsequent application of the belt structure.

In a radially outer position with respect to the belt structure a tread band is applied, also made from elastomeric material like other structural elements making up the tyre.

Between the tread band and the belt structure a so-called "underlayer" of elastomeric material with properties suitable to ensure a steady union of the tread band itself can be arranged.

On the side surfaces of the carcass structure, respective sidewalls of elastomeric material are also applied, each extending from one of the side edges of the tread band up to the respective annular anchoring structure to the beads.

Conventional manufacturing processes of tyres for vehicle wheels essentially provide that the components of the tyre listed above be firstly made separately from each other, to then be assembled in a subsequent manufacturing step of the tyre.

In particular, with reference to the embodiment of the aforementioned annular anchoring structures, the process for making such annular structures comprises a first manufacturing step of the bead core and a subsequent coating step of the bead core with a reinforcement tape.

A type of bead core known in the field of the manufacture of tyres for vehicle wheels consists of a plurality of adjacent coils of a rubber-coated.metal wire assembled in a plurality of layers arranged radially one on top of the other to form an annular element having a predetermined cross section.

Then, the aforementioned reinforcement tape is wound on the bead core thus made. Such a tape comprises a layer of elastomeric material reinforced with one or more textile cords, typically made from nylon.

After the step of coating the bead core with the reinforcement tape a pre-vulcanisation step of the coated bead core can also be carried out to further tighten together the coils that constitute the metallic core of the bead core. After the pre-vulcanisation step a gluing step of the coated and pre-vulcanised bead core is typically carried out, to prepare the bead core to the assembly with the other components of the tyre.

With particular reference to the process for coating the bead core with the reinforcement tape, conventional processes like those described in US 4,097,321 comprise a first loading step of the reinforcement tape on a spool starting from a high-capacity tape collection reel. The spool is then mounted on a bead core coating machine to carry out the winding of the bead core with the reinforcement tape loaded on the spool.

More specifically, US 4,097,321 describes an example of a machine for coating a bead core with a reinforcement tape. Such a machine is provided with a mechanism for holding the bead core and making it rotate at a predetermined speed in a predetermined plane and a device for winding a tape on the bead core. The winding device of the tape comprises a motorised annular wheel on which a spool onto which the reinforcement tape has previously been loaded is mounted. The annular wheel is provided with a slit to allow the positioning of the bead core with respect to the rotational axis of the wheel. The annular wheel is able to rotate about the axis thereof so as to make the spool rotate about the cross-section of the bead core. The rotational speed of the annular wheel is correlated to that of the bead core so as to spirally wind the tape on the bead core. The pitch of the spiral can be varied by changing the rotational speed of the bead core and of the winding device. The machine also comprises a knife to cut the tape after the winding has been completed and the winding device has stopped.

The Applicant has noted that the process for coating the bead core carried out with a conventional machine of the type described above requires, prior to carrying out the step of winding the reinforcement tape onto the bead core, that a loading step of the tape onto the spool and a loading step of the spool onto the machine that will carry out the coating be carried out.

The Applicant has also observed that the spool typically has a limited capacity; in particular, the amount of tape that can be loaded onto the spool is sufficient to wind no more than two/three bead cores, the winding of each bead core generally requiring a large number of revolutions (for example about 80 revolutions) of the spool about the cross-section of the bead core.

The Applicant has therefore found that in conventional processes and machines of the type described above it is necessary to periodically replace the empty spool with a loaded spool. The loading/unloading steps of the spool onto/from the deposition machine, being carried out manually by the operator, require a certain intervention time that implies an increase in the overall time used by the machine to carry out the complete coating of the bead cores.

The Applicant has realised that it is possible to automate the coating step of the bead core by eliminating the loading/unloading steps of the spool onto/from the machine, thus decreasing the overall time taken by the machine to carry out the complete coating of the bead cores.

In particular, the Applicant has found that the aforementioned loading/unloading steps of the spool can be eliminated by making the wheel that carries out the winding of the reinforcement tape onto the bead core works as a spool that is loaded during a first step of the winding.

US 3,718,523 discloses a tire bead wrapping machine designed to automatically feed a cord to shuttle from a spool mounted remote from the shuttle. A cord feeding assembly uses a pair or gripping fingers to bring the end of the cord to a cord feeding position adjacent one side of the shuttle, from which position the free end of the cord is picked up, at the start of the bead wrapping cycle, by an accumulator assembly including three accumulator spools. As the shuttle rotates about the bead the excess of cord is stored on the accumulator spools. When a sufficient length of cord for one wrapping cycle is removed from the spool, a cord cutting assembly severs the cord and holds the free end of the cord coming from the spool, which free end is gripped by the gripping fingers and conveyed to the cord feeding position to prepare the machine for the next bead wrapping cycle.

The present invention therefore relates, in a first aspect thereof, to a method for manufacturing an annular anchoring structure of a tyre for vehicle wheels according to claim 1.

Advantageously, the method of the present invention comprises a bead core coating step that, unlike conventional coating processes, does not provide for the execution of any manual loading/unloading step of the spool onto/from the machine used to carry out the coating of the bead core. Indeed, the method of the present invention provides for the execution of a loading step of the reinforcement tape onto the same deposition member that carries out the winding of the bead core and during at least part of the step of winding the bead core. The deposition member thus acts itself as a spool whilst it carries out the winding of the tape onto the bead core.

Therefore it is not necessary to provide for the interruption of the winding step to replace the spool.

The Applicant also observes that the tape deposition member advantageously has a tape accumulation speed much higher than that of the spool; it is thus possible to accumulate on such a deposition member an amount of tape per unit time much greater than that which can be accumulated in a conventional spool used in conventional processes.

In a second aspect thereof, the present invention relates to a method for manufacturing a tyre according to claim 12.

In a third aspect thereof, the present invention relates to an apparatus for manufacturing an annular anchoring structure for a tyre for vehicle wheels according to claim 13.

Such an apparatus allows the coating step of the method for manufacturing a tyre of the present invention to be carried out. Such an apparatus therefore allows the advantageous characteristics discussed above with reference to the aforementioned method for manufacturing the tyre to be achieved. Preferred embodiments of the invention are defined in the dependent claims.

In the method of the present invention, the steps of winding the reinforcement tape onto the bead core and of loading the reinforcement tape onto the tape deposition member are carried out through the same rotational movement of the tape deposition member about a respective rotational axis. In this way, advantageously, a substantial structural and functional simplification is achieved with respect to conventional coating processes and/or machines, where the steps of winding the tape onto the bead core and of loading the tape onto the spool took place through different and specifically provided devices and/or members.

The present invention, in at least one of the aforementioned aspects, can have the following preferred and/or advantageous characteristics.

In particular, in the method of the present invention, preferably, the step of loading the reinforcement tape onto the tape deposition member is carried out during a first part of the step of winding the reinforcement tape onto the bead core. In this way, advantageously, a substantial reduction of the time taken to carry out the winding of the bead core is achieved with respect to conventional coating processes and/or machines, where the steps of winding the tape onto the bead core and of loading the tape onto the spool took place one after the other following loading of the spool onto the machine.

In preferred embodiments of the method of the present invention, the step of loading the reinforcement tape onto the tape deposition member comprises the step of continuously drawing the reinforcement tape from a tape collection reel arranged adjacent to the tape deposition member. Advantageously, the tape deposited on the bead core is thus drawn directly from the high-capacity tape collection reel, i.e. without using any spool.

Preferably, a cutting step of the reinforcement tape is also carried out so as to interrupt the drawing of the tape from said tape collection reel once the winding of the bead core is completed.

More preferably, the cutting step of the reinforcement tape is carried out after the tape deposition member has carried out a predetermined number of revolutions about the respective rotational axis. As already stated, the Applicant has verified that, advantageously, the number of revolutions that the deposition member must carry out to completely wind a bead core is substantially lower than that carried out by the spool in conventional processes and machines, with a consequent saving of time and increasing of production capacity.

Even more preferably, after the step of cutting the reinforcement tape, the step of winding onto the bead core the reinforcement tape loaded on the tape deposition member and not yet deposited on the bead core is carried out. In accordance with the present invention, advantageously, the tape loaded on the deposition member is used to complete the winding of the bead core. The complete winding of the tape onto the bead core thus takes place through a continuous process that can be easily automated.

Preferably, to carry out the coating step of the bead core the bead core is positioned with respect to the tape deposition member in such a way that a cross-section of the bead core is placed at a rotational axis of the tape deposition member. According to the invention, a free end of the reinforcement tape is associated with the bead core at said cross-section of the bead core. Advantageously, the aforementioned operations are carried out automatically.

Even more preferably, in the coating step of the bead core the tape deposition member and the bead core are moved simultaneously about respective rotational axes so as to wind the reinforcement tape onto the bead core and simultaneously load the reinforcement tape onto the tape deposition member. Advantageously, the fact that the winding onto the bead core and the loading of the tape onto the deposition member to allow the winding to be completed after the cutting step are carried out simultaneously allows a substantial reduction in the processing time (and therefore a substantial increase in production capacity) with respect to conventional processes.

Preferably, in the aforementioned step of simultaneously moving the tape deposition member and the bead core the tape deposition member is moved at a first predetermined rotational speed about the respective rotational axis and the bead core is moved at a second predetermined rotational speed about a respective rotational axis. More preferably, during the winding of the tape onto the bead core said first and second predetermined rotational speeds are kept constant, so as to obtain a homogeneous and uniform coating on the entire bead core.

Preferably, the bead core support device of the apparatus of the present invention comprises at least one bead core support roller adapted to act upon an inner annular surface portion of the bead core to support the bead core with respect to the tape deposition member. More preferably, the bead core support device further comprises at least one bead core locking roller substantially parallel to said at least one bead core support roller, adapted to cooperate with said at least one bead core support,roller to lock the bead core in position with respect to the tape deposition member. Even more preferably, the bead core support device further comprises at least one side bead core support roller positioned with respect to said at least one bead core support roller in a position such as to provide the bead core with a lateral support for a side surface portion of the bead core arranged at a side axially opposite the inner annular surface portion of the bead core supported by said at least one bead core support roller.

In the preferred embodiments thereof, the apparatus of the present invention comprises a first rotation command group of said tape deposition member about a respective rotational axis.

Preferably, said first command group comprises an electric motor and first motion transmission members between the electric motor and the tape deposition member.

In the preferred embodiments thereof, the apparatus of the present invention further comprises a second rotation command group of said bead core about a respective rotational axis.

Preferably, said second command group comprises second motion transmission members from the aforementioned electric motor to said at least one bead core support roller.

In the apparatus of the present invention, preferably, the tape deposition member comprises an annular wheel having an opening to allow the positioning of a cross-section of the bead core inside the annular wheel.

Preferably, said at least one bead core support roller is arranged inside said annular wheel so as to position said cross-section of said bead core at a rotational axis of said annular wheel.

In a particularly preferred embodiment of the apparatus of the present invention, the tape deposition member comprises a plurality of first rollers associated with said annular wheel.

Preferably, said first rollers are arranged one after the other along a first circumference of said annular wheel. More preferably, said first rollers have respective rotational axes substantially parallel to the rotational axis of the annular wheel. Advantageously, the aforementioned rollers allow the winding of the tape onto the bead core and, simultaneously, the winding of the tape onto the tape deposition wheel during a first step of the winding of the tape onto the bead core.

In the aforementioned particularly preferred embodiment, the apparatus of the present invention further comprises a second roller associated with said annular wheel at a tape inlet zone. Preferably, such a second roller has a respective rotational axis inclined by a predetermined angle with respect to the rotational axis of said annular wheel. Advantageously, this roller angularly deviates the tape directly towards the bead core so as to orientate it correctly with respect to the cross-section of the bead core to be coated.

In a preferred embodiment of the apparatus of the present invention, said tape inlet zone is defined in said annular wheel at said opening.

In a second preferred embodiment of the apparatus of the present invention, said tape inlet zone is defined in said annular wheel at the axially opposite side with respect to said opening. Advantageously, with this arrangement the tape coating machine does not have any members at the access zone of the bead core inside the annular wheel.

Preferably, the apparatus of the present invention comprises a support frame of said annular wheel and a plurality of third rollers associated with said frame at a second circumference outside said first circumference. Advantageously, the rollers arranged on the second circumference keep in position the tape wound on the first rollers of the annular wheel by counteracting the centrifugal force which such a tape is subjected to due to the high rotational speed of the annular wheel.

More preferably, said third rollers have respective rotational axes substantially parallel to the rotational axis of said annular wheel.

Preferably, the apparatus of the present invention further comprises a tape feeding group arranged upstream of said annular wheel to pull the reinforcement tape from one tape collection reel and feed it to said annular wheel.

More preferably, said tape feeding group comprises a guide member of said tape in said tape inlet zone. Even more preferably, said guide member comprises a fourth roller arranged in a position which is tangential to an envelope of said first rollers during the rotation of said annular wheel about the respective rotational axis. Such a fourth roller, advantageously, contributes to orientating the tape in the optimal way with respect to the cross-section of the bead core to be coated.

Preferably, the apparatus of the present invention further comprises a cutting device of said reinforcement tape. Preferably, said cutting member acts upon the tape without needing to interrupt the winding step of the tape onto the bead core.

Further characteristics and advantages of the present invention shall become clearer from the following detailed description of a preferred embodiment of an apparatus and of a method in accordance with the present invention, given as a non-limiting example with reference to the attached drawings. In such drawings:
- figure 1 is a schematic view of an apparatus for coating a bead core in accordance with the present invention;
- figure 2 is a schematic perspective view of a sectioned portion of bead core coated with the apparatus of figure 1;
- figure 3 is a schematic and enlarged view of a portion of the apparatus of figure 1;
- figures 4a to 4n schematically show a sequence of a coating step of the bead core carried out with the apparatus of figure 1.

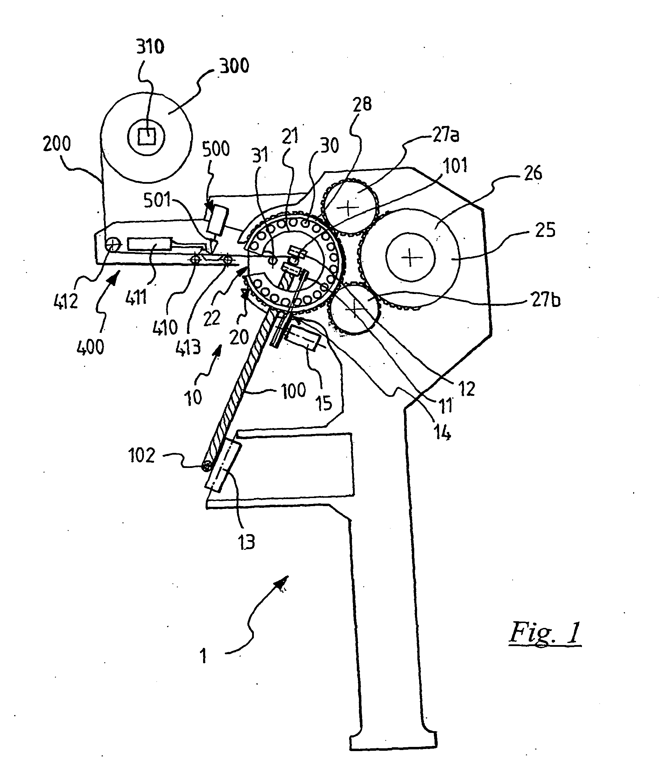

In figure 1, an example embodiment of an apparatus for manufacturing an annular anchoring structure of a tyre for vehicle wheels in a method for manufacturing a tyre in accordance with the present invention is indicated with 1. In particular, the apparatus 1 is used to carry out a step of coating a bead core 100 for a tyre for vehicle wheels with a reinforcement tape 200. Preferably, but not exclusively, such a tyre is a tyre for truck wheels.

The bead core 100 is adapted to be associated with an end flap of a carcass ply of the tyre during its manufacture.

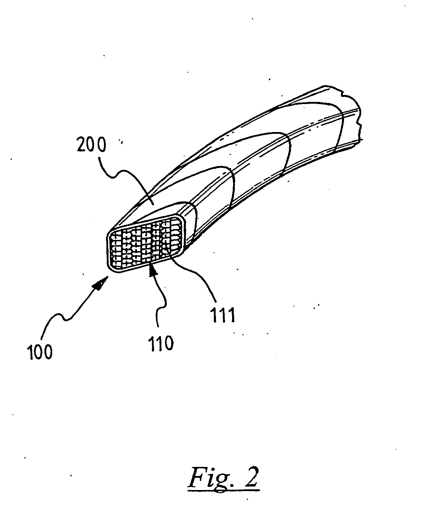

In an example embodiment, illustrated schematically in figure 2, the bead core 100 comprises an annular metallic core 110 consisting of a plurality of adjacent coils (all indicated with 111) of a rubber-coated metal wire assembled in a plurality of layers radially arranged one on top of the other to form an annular element. The reinforcement tape 200 is then wound helically onto the bead core 100, as shall be described hereafter.

The pitch of the helicoid defined by the tape 200 on the bead core is preferably selected so as to make the adjacent coils of the helicoid partially lie on top of one another. Such a pitch is preferably kept constant along the entire bead core.

The reinforcement layer 200, preferably, comprises a fabric incorporated in a matrix of elastomeric material.

In a preferred embodiment, the fabric of the reinforcement layer 200 comprises one or more textile cords of nylon, preferably nylon 942, whereas the matrix of elastomeric material is natural and synthetic rubber based.

After the step of coating the bead core 100 with the reinforcement tape 200 the bead core 100 is subjected to a pre-vulcanisation process to tighten together the coils 111 that constitute the metallic core 110 of the bead core 100. After the pre-vulcanisation step a gluing step of the coated and pre-vulcanised bead core 100 is carried out, to prepare the bead core to the tightening with the other components of the tyre. Such a gluing step, for example, can comprise a further coating step of the bead core with a reinforcement tape, such a step being totally identical to that carried out before pre-vulcanisation.

With reference to the example embodiment of the apparatus 1 of the present invention shown in figure 1, such an apparatus comprises a support device 10 of the bead core 100 and a deposition member 20 of the tape 200 on the bead core 100. As described hereafter, the tape deposition member 20 also acts, in an initial part of the step of coating the bead core, as a tape accumulation member. The reinforcement tape 200 accumulated is then wound onto the bead core 100 in an end step to complete the coating of the bead core 100.

The reinforcement tape 200 is drawn from a high-capacity tape collection reel 300 supported by a suitable support member 310 positioned near to the tape deposition member 20.

The apparatus 1 comprises, upstream of the tape deposition member 20, a tape feeding group 400. The group 400 pulls a free end of the reinforcement tape 200 from the tape collection reel 300 and feeds it to the tape deposition member 20. An appropriate pressing device (not illustrated) presses such a free end on an outer surface portion of the bead core 100 previously positioned in the apparatus 1 to thus be able to begin the winding step. The pressing device then releases the free end of the tape 200 when winding has begun.

In the example illustrated in figure 1, the tape feeding group 400 comprises a moving roller 410 actuated by a motor 411, a deviating roller 412 upstream of said moving roller 410 and a guide roller 413 downstream of said moving roller 410 in the path of the tape 200 from the reel 300 to the bead core 100.

The apparatus 1 also comprises, upstream of the tape deposition member 20, a cutting device 500 of the tape 200. Such a device 500 comprises, in particular, a blade 501 adapted to cut the tape 200 downstream of the moving roller 410 and upstream of the guide roller 413 in an end step of the coating operation of the bead core 100, as shall be described hereafter in the present description.

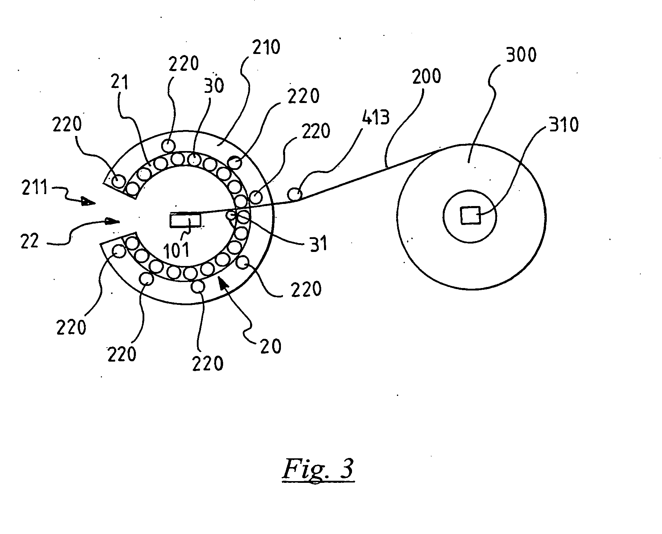

The position of the support member 310 of the tape collection reel 300 with respect to the deposition member 20 can be different to the one illustrated, in which case the positions of the feeding group 400 and of the cutting device 500 shall also be different. For example, figure 3 shows a layout in which the tape 200 is fed to the tape deposition member 20 at the opposite side to that illustrated in figure 1. It should be noted, in particular, how the guide roller 413 in this case is positioned at the opposite side to the one in which it is positioned in figure 1.

The tape deposition member 20 comprises an annular wheel 21 rotatably associated with a support frame 210, visible in figure 3. The annular wheel 21 has an opening 22 to allow the positioning of a cross-section (indicated with 101) of the bead core 100 at a rotational axis of the wheel 21. Similarly, the support frame 210 has an analogous opening 211.

In the example illustrated in figure 1, the tape inlet zone inside the annular wheel 21 is defined at the opening 22 of the wheel 21. In the example of figure 3, on the other hand, the tape inlet zone is defined at the axially opposite side to the opening 22.

The annular wheel 21 is made to rotate about its rotational axis by an electric motor 25, through appropriate motion transmission members operatively arranged between the electric motor 25 and the annular wheel 21. In the example illustrated in figure 1, the aforementioned motion transmission members comprise a first toothed wheel 26 fitted onto the shaft of the electric motor 25 and engaged with a pair of toothed wheels 27a, 27b, in turn engaged with a toothed wheel 28 integral with the annular wheel 21.

The annular wheel 21, at a circumferential portion thereof, has a plurality of rollers, all indicated with 30, having respective rotational axes substantially parallel to the rotational axis of the annular wheel 21 and arranged one after the other on a substantially circumferential line defined in said annular wheel 21. For the sake of clearness of the figures, in figure 1 and 3 the reference numeral 30 is associated with just one of such rollers.

As shall be described hereafter, the rollers 30 act as support elements of the tape 200 accumulated in the wheel 21 during a first part of the step of winding the tape 200 onto the bead core 100.

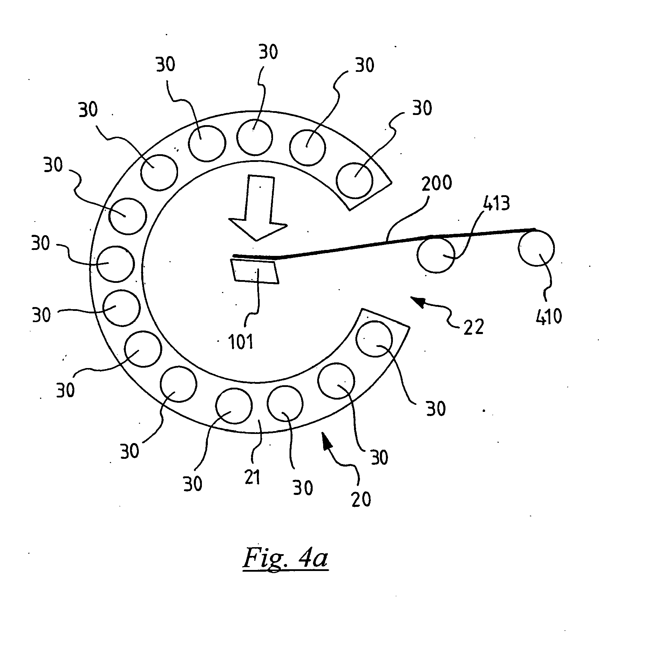

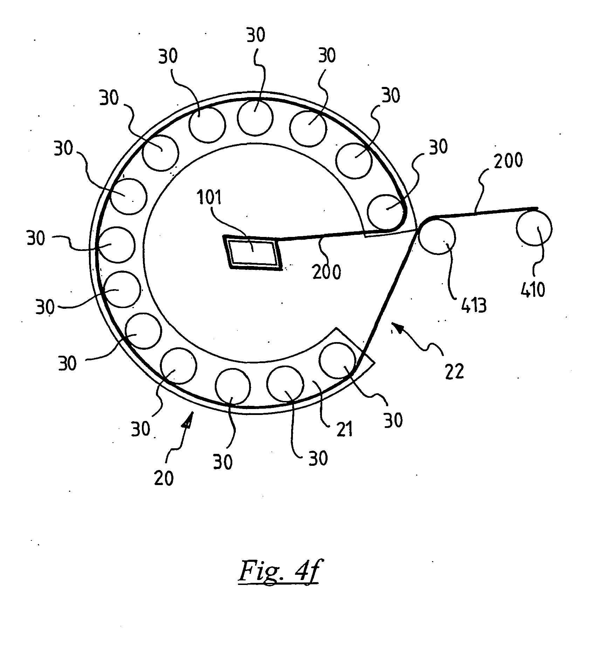

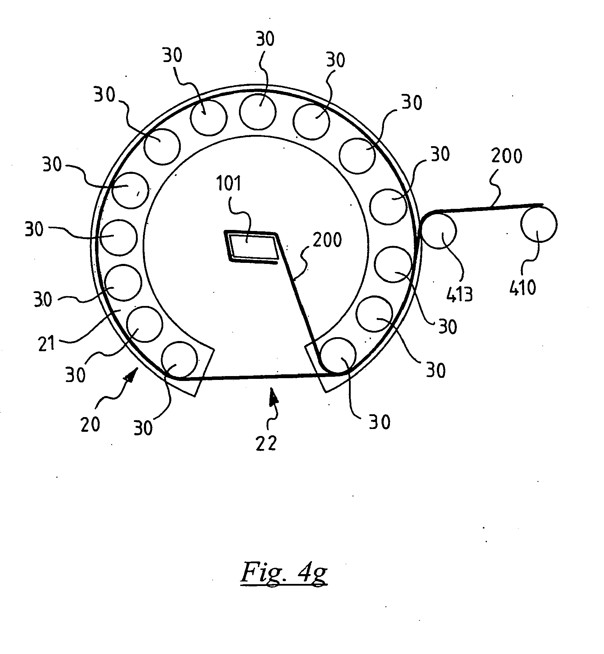

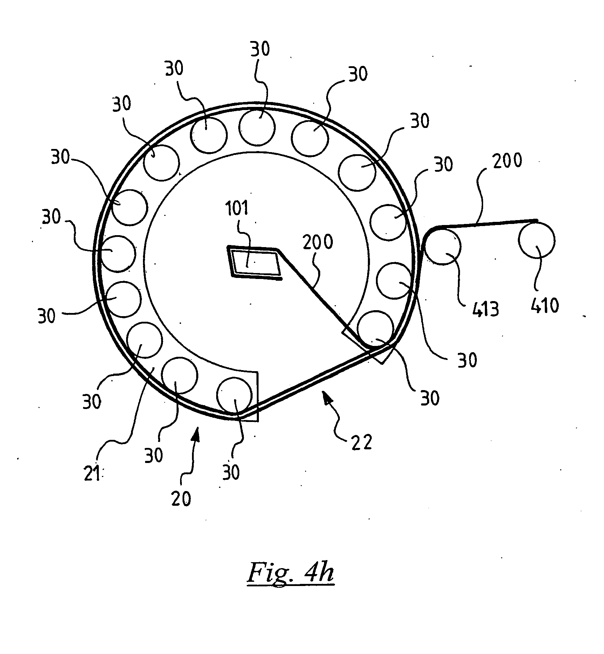

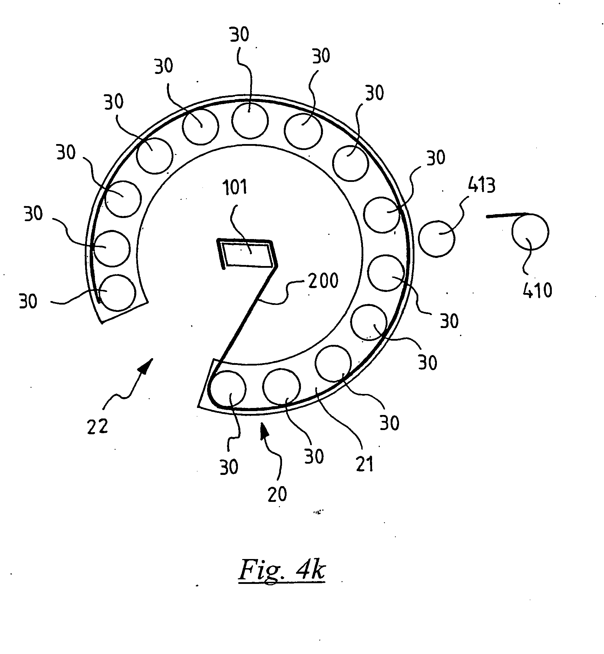

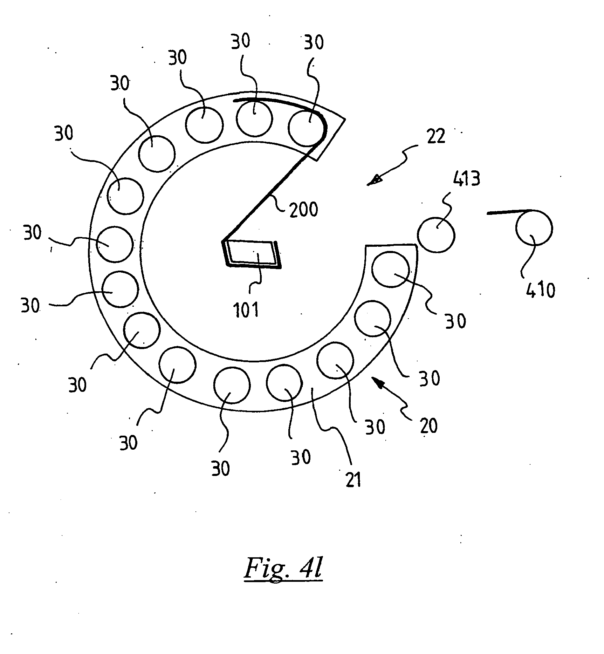

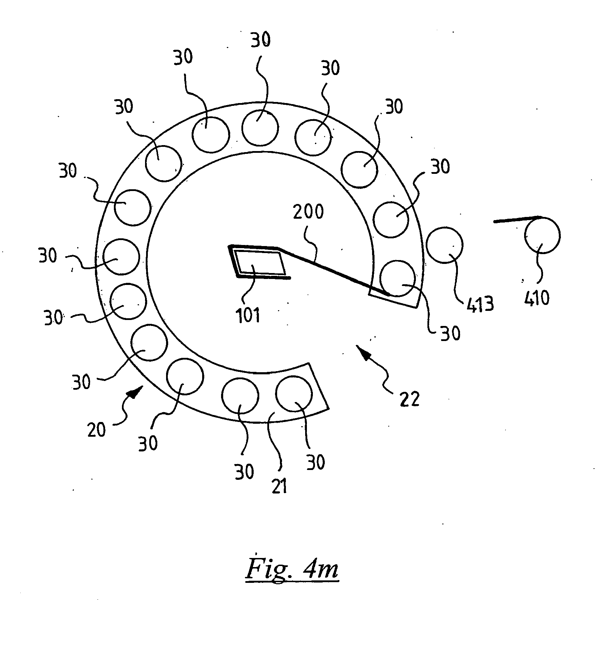

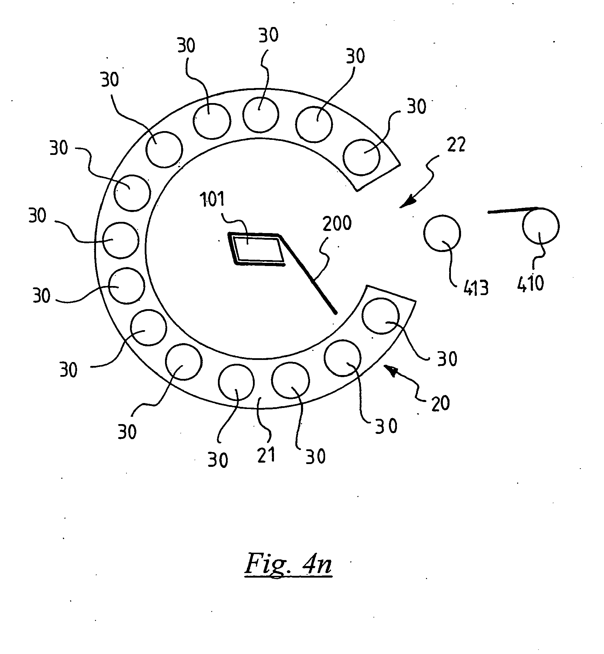

The apparatus 1 also comprises a deviating roller 31 associated with the annular wheel 21 at the tape inlet zone 200 into the wheel 21. In particular, the different position of the deviating roller 31 in the two different embodiments illustrated respectively in figure 1 and 3 should be noted. The deviating roller 31 is not illustrated in figures 4a-4n.

The deviating roller 31 has a respective rotational axis inclined by a predetermined angle with respect to the rotational axis of the annular wheel 21. Such an angle is selected according to the pitch of the tape winding helicoid that one wishes to be obtained on the bead core 100.

Preferably, the guide roller 413 is arranged in a position which is tangential to the envelope of the rollers 30 during the rotation of the annular wheel 21 about the respective rotational axis so as to orientate the tape 200 in the optimal way with respect to the cross-section 101 of the bead core 100 to be coated.

With reference to figure 1, the bead core support device 10 comprises a support roller 11 arranged inside the annular wheel 21 and on which the inner annular surface portion of the cross-section 101 of the bead core 100 is rested, positioned at the rotational axis of the annular wheel 21. Such a roller 11 has a rotational axis substantially parallel to the rotational axis of the bead core 100, i.e. perpendicular to the rotational axis of the annular wheel 21. Preferably, the outer surface of the support roller 11 fits onto the inner profile of the bead core 100.

Above the support roller 11 of the bead core 100 a bead core locking roller 12 is provided arranged with the respective rotational axis parallel to the rotational axis of the support roller 11. The bead core locking roller 12 acts in abutment on an outer side surface portion of the bead core 100 at the cross-section 101 supported by the support roller 11 and cooperates with said roller 11 to lock the bead core 100 in position with respect to the annular wheel 21. Preferably, the outer surface of the locking roller 12 fits onto the outer profile of the bead core 100.

The bead core support device 10 further comprises a lateral support roller 13 for the bead core positioned so as to provide the bead core 100 with a lateral support at a side surface portion 102 of the bead core 100 arranged at a side axially opposite the cross-section 101 supported by the support roller 11. The rotational axis of the lateral support roller 13 is substantially perpendicular to the rotational axis of the bead core 100.

The support roller 11 is made to rotate by appropriate motion transmission members operatively arranged between the electric motor 25 and the support roller 11. In the example illustrated in figure 1, such motion transmission members comprise a belt drive 14 between a driving roller 15 associated with the motor 25 (in figure 1 the kinematic connection between motor 25 and driving roller 15 is not illustrated) and the support roller 11.

Preferably, the rotational speed of the bead core 100 and of the annular wheel 21 are controlled and correlated with each other so as to make a winding with constant pitch. Regarding this, the apparatus 1 comprises a control device (not illustrated) of the aforementioned speeds. Such a control device, in particular, keeps the variation in speed between the aforementioned speeds constant during the entire winding step of the tape onto the bead core.

As shown in figure 3, a plurality of rollers .220 are associated with the support frame 210 of the annular wheel 21. Such rollers 220 have respective rotational axes substantially parallel to the rotational axis of the annular wheel 21 and follow one another along a circumferential line defined on the frame 210 outside the circumferential line on which the rollers 30 of the annular wheel 21 follow one another. The rollers 220 avoid the tape wound on the rollers 30 could run away because of the centrifugal force to which the tape is subjected during the rotation of the annular wheel 21.

The apparatus 1 described above thus makes it possible, in a method for manufacturing a tyre comprising a carcass structure having at least one carcass ply associated with axially opposite annular anchoring structures, to manufacture one of such annular anchoring structures. The apparatus 1, in particular, makes it possible to carry out the step of coating the bead core with the reinforcement tape 200.

In operation and in the method for coating the bead core 100, with reference to figures 1 and 3, the bead core 100 is initially positioned inside the annular wheel 21 making a cross-section 101 thereof pass through the opening 22 of the wheel 21 and the opening 211 of the frame 210. Such a cross-section is positioned on the support roller 11 and locked through the locking roller 12. The axially opposite portion of the bead core is rested upon the lateral support roller 13.

The reinforcement tape 200 is then drawn from the tape collection reel 300 actuating the tape feeding group 400. The group 400, through the moving roller 410, pulls a free end of the reinforcement tape 200 from the tape collection reel 300. Such a free end is fed to the annular wheel 21, after having been orientated correctly through the guide roller 413 and the deviating roller 31.

The pressing device presses such a free end of tape on the outer surface of the cross-section 101 of the bead core 100 positioned at the rotational axis of the annular wheel 21, making it adhere to it.

Such a step is shown in figure 4a of the sequence illustrated in figures 4a-4n.

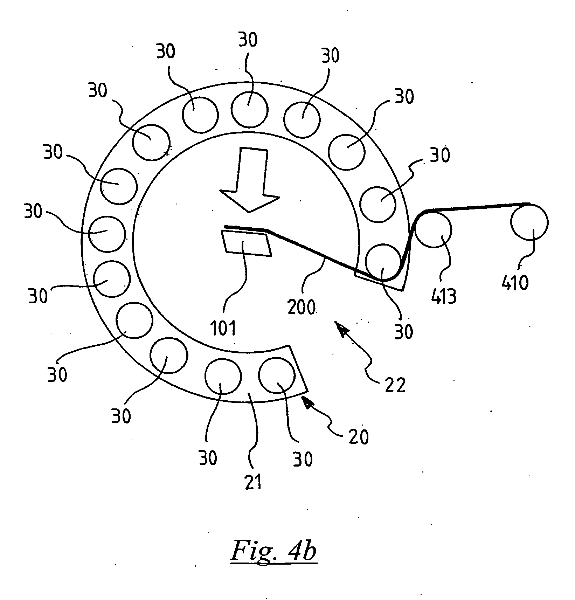

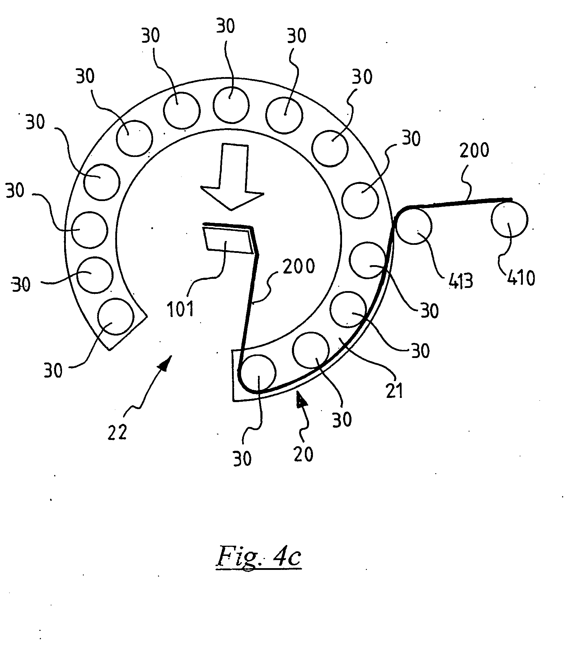

Then the step of winding the tape 200 onto the bead core begins. During an initial part of the winding step, the pressing device remains active on the tape 200 which is being deposited on the bead core 100 whilst the bead core 200 and the annular wheel 21 are made to rotate about the respective axes with controlled and constant speeds. As shown in the sequence of figures 4b, 4c, the rotational motion of the annular wheel 21 with respect to the bead core causes the simultaneous winding of the reinforcement tape 200 onto the bead core 100 and onto the rollers 30 of the annular wheel 21.

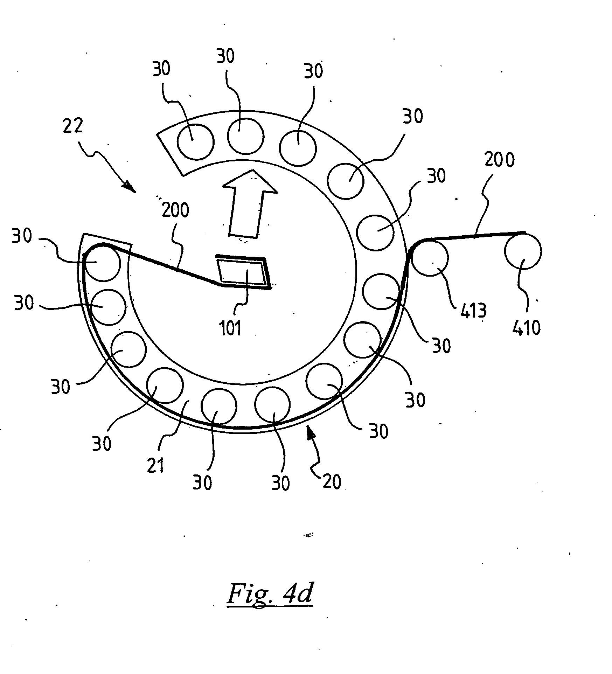

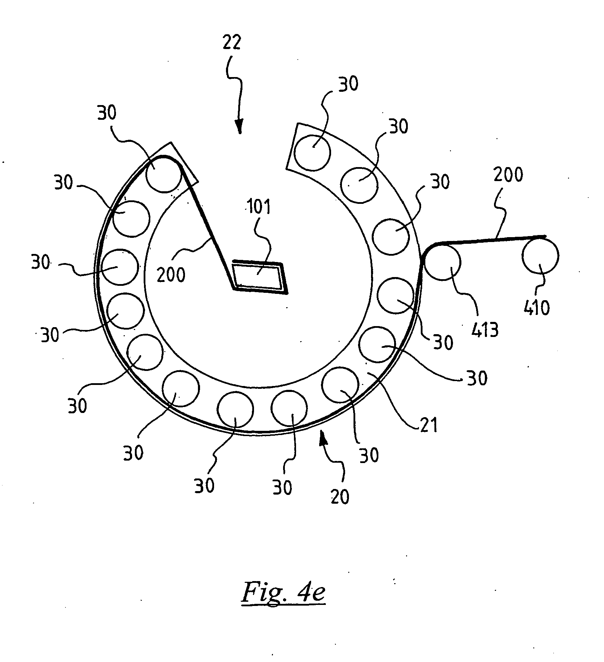

Thereafter the pressing device deactivates (figure 4d) whereas the winding of the tape 200 onto the bead core and onto the rollers 30 continues, as shown in the sequence of figures 4e-4h.

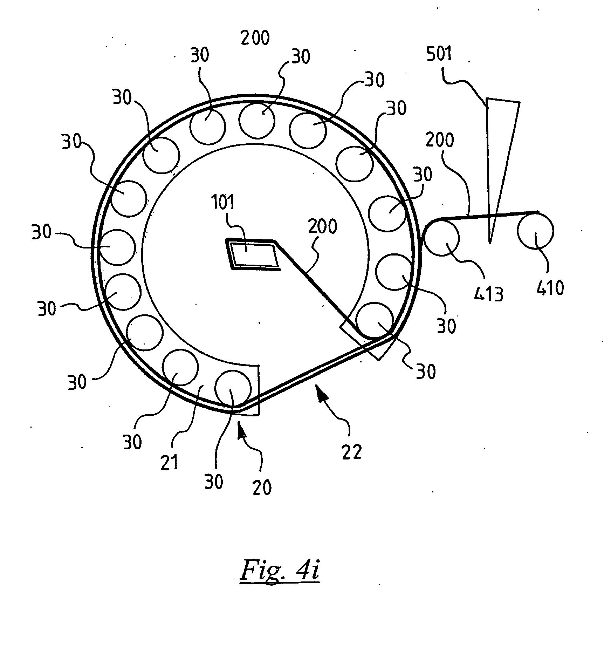

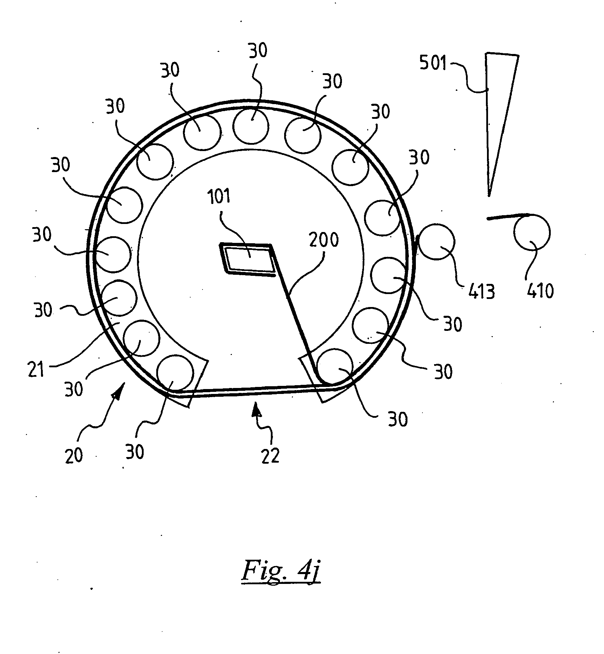

The apparatus 1 is set up so that after the annular wheel 21 has completed a predetermined number of revolutions sufficient to allow the complete winding of the bead core, the blade 501 of the cutting device 500 is activated to cut the reinforcement tape 200 (figure 4i). Then follows a coating finishing step in which the reinforcement tape 200 wound on the rollers 30 of the annular wheel 21 is deposited on the bead core 100, as shown in the sequence of figures 4j to 4n.

Once all of the tape 200 loaded on the annular wheel has been applied onto the bead core 100, the bead core is unloaded from the apparatus 1 and the end flap of the tape 200 wound on the bead core is laid down by hand on the bead core.

The bead core winding step is then finished and the apparatus 1 is ready to carry out the coating of a new bead core.

## Claims

1. Method for manufacturing an annular anchoring structure of a tyre for vehicle wheels, comprising the steps of:
- manufacturing a bead core (100);
- coating said bead core (100) with a reinforcement tape (200);
wherein the step of coating the bead core (100) comprises the steps of:
- winding said reinforcement tape (200) onto said bead core (100) moving a tape deposition member (20, 21) with respect to said bead core (100);
- loading said reinforcement tape (200) onto said tape deposition member (20, 21), said loading step being carried out simultaneously with at least part of the step of winding said reinforcement tape (200) onto said bead core (100), wherein the steps of winding the reinforcement tape (200) onto the bead core (100) and of loading the reinforcement tape (200) onto the tape deposition member (20, 21) are simultaneously caused by the same rotational movement of said tape deposition member (20, 21) about a respective rotational axis;
the step of coating the bead core (100) further comprising a step of associating a free end of said reinforcement tape (200) with a cross-section (101) of said bead core (100) before beginning the above winding and loading steps.

2. Method according to claim 1, wherein the step of loading the reinforcement tape (200) onto said tape deposition member (20, 21) is carried out during a first part of the step of winding said reinforcement tape (200) onto said bead core (100).

3. Method according to any one of the previous claims, wherein the step of loading the reinforcement tape (200) onto said tape deposition member (20, 21) comprises the step of continuously drawing the reinforcement tape (200) from a tape collection reel (300).

4. Method according to claim 3, further comprising the step of cutting the reinforcement tape (200) so as to interrupt the drawing from said tape collection reel (300).

5. Method according to claim 4, wherein the step of cutting the reinforcement tape (200) is carried out after said tape deposition member (20, 21) has carried out a predetermined number of revolutions about the respective rotational axis.

6. Method according to claim 4 or 5, further comprising, after the step of cutting the reinforcement tape (200), the step of winding on said bead core (100) the reinforcement tape (200) loaded on said tape deposition member (20, 21) and not yet deposited on the bead core (100).

7. Method according to any one of the previous claims, wherein the step of coating the bead core (100) comprises the step of positioning said bead core (100) with respect to said tape deposition member (20, 21) in such a way that a cross-section (101) of said bead core (100) is placed at a rotational axis of said tape deposition member (20, 21).

8. Method according to claim 7, wherein the step of coating the bead core (100) further comprises the step of simultaneously moving said tape deposition member (20, 21) about said rotational axis and said bead core (100) about a respective rotational axis so as to wind said reinforcement tape (200) onto said bead core (100) and simultaneously wind said reinforcement tape (200) onto said tape deposition member (20, 21).

9. Method according to claim 7 or 8, wherein said tape deposition member (20, 21) comprises a motorised wheel (21) having an opening (22) to allow the positioning of said bead core (100) with respect to said tape deposition member (20, 21) in said step of positioning said bead core (100) with respect to said tape deposition member (20, 21).

10. Method according to claim 8 or 9, wherein in said step of simultaneously moving the tape deposition member (20, 21) and the bead core (100) the tape deposition member (20, 21) is moved at a first predetermined rotational speed about the respective rotational axis and the bead core (100) is moved at a second predetermined rotational speed about a respective rotational axis.

11. Method according to claim 10, wherein in said step of simultaneously moving the tape deposition member (20, 21) and the bead core (100) said first and second predetermined rotational speeds are kept constant.

12. Method for manufacturing a tyre comprising a carcass structure having at least one carcass ply associated with axially opposite annular anchoring structures, said method comprising the steps of:
- manufacturing at least one pair of annular anchoring structures of said carcass structure according to claim 1;
- associating said pair of annular anchoring structures with said at least one carcass ply at axially opposite end flaps of the carcass ply.

13. Apparatus (1) for manufacturing an annular anchoring structure for a tyre for vehicle wheels, comprising a device (10) for supporting the bead core (100) and a tape deposition member (20, 21) movable with respect to said bead core support device (10) to wind a reinforcement tape (200) onto a bead core (100), wherein during the winding of the reinforcement tape (200) onto the bead core (100) said tape deposition member (20, 21) also acts as a tape loading member, the apparatus (1) further comprising a pressing device for associating a free end of said reinforcement tape (200) with a cross-section (101) of said bead core (100) before beginning the above winding and loading steps.

14. Apparatus (1) according to claim 13, wherein said bead core support device (10) comprises at least one bead core support roller (11) adapted to act upon an inner annular surface portion of said bead core (100) to support said bead core (100) with respect to said tape deposition member (20, 21).

15. Apparatus (1) according to claim 14, wherein said bead core support device (10) further comprises at least one bead core locking roller (12) substantially parallel to said at least one bead core support roller (11), adapted to cooperate with said at least one bead core support roller (11) to lock in position said bead core (100) with respect to said tape deposition member (20, 21).

16. Apparatus (1) according to claim 14 or 15, wherein said bead core support device (10) further comprises at least one lateral bead core support roller (13) positioned with respect to said at least one bead core support roller (11) in a position such as to provide the bead core (100) with a lateral support for a side surface portion (102) of said bead core (100) arranged at a side axially opposite the inner annular surface portion of said bead core (100) supported by said at least one bead core support roller (11).

17. Apparatus (1) according to any one of claims from 13 to 16, comprising a first rotation command group (25, 26, 27a, 27b) of said tape deposition member (20, 21) about a respective rotational axis.

18. Apparatus (1) according to claim 17, wherein said first command group (25, 26, 27a, 27b, 28) comprises an electric motor (25) and first motion transmission members (26, 27a, 27b, 28) between said electric motor (25) and said tape deposition member (20, 21).

19. Apparatus (1) according to one or more of claims from 13 to 18, comprising a second rotation command group (25, 14, 15) of said bead core (100) about a respective rotational axis.

20. Apparatus (1) according to claim 19 when depending on claims 14 and 18, wherein said second command group (25, 14, 15) comprises second motion transmission members (14, 15) from said electric motor (25) to said at least one bead core support roller (11).

21. Apparatus (1) according to any one of claims from 13 to 20, wherein said tape deposition member (20, 21) comprises an annular wheel (21) having an opening (22) to allow the positioning of a cross-section (101) of said bead core (100) inside said annular wheel (21).

22. Apparatus (1) according to claim 21 when depending on claim 14, wherein said at least one bead core support roller (11) is arranged inside said annular wheel (21) so as to position said cross-section (101) of said bead core (100) at a rotational axis of said annular wheel (21).

23. Apparatus (1) according to claim 21 or 22, wherein said tape deposition member (20, 21) comprises a plurality of first rollers (30) associated with said annular wheel (21).

24. Apparatus (1) according to claim 23, wherein said first rollers (30) are arranged one after the other along a first circumference of said annular wheel (21).

25. Apparatus (1) according to claim 24, wherein said first rollers (30) have respective rotational axes substantially parallel to the rotational axis of the annular wheel (21).

26. Apparatus (1) according to any one of claims from 21 to 25, further comprising a second roller (31) associated with said annular wheel (21) at a tape inlet zone thereof.

27. Apparatus (1) according to claim 26, wherein said second roller (31) has a respective rotational axis inclined by a predetermined angle with respect to the rotational axis of said annular wheel (21).

28. Apparatus (1) according to claim 26 or 27, wherein said tape inlet zone is defined in said annular wheel (21) at said opening (22).

29. Apparatus (1) according to claim 26 or 27, wherein said tape inlet zone is defined in said annular wheel (21) at the axially opposite side with respect to said opening (22).

30. Apparatus (1) according to any one of claims from 24 to 29, further comprising a support frame (210) of said annular wheel (21) and a plurality of third rollers (220) associated with said frame (210) at a second circumference outside said first circumference.

31. Apparatus (1) according to claim 30, wherein said third rollers (220) have respective rotational axes substantially parallel to the rotational axis of said annular wheel (21).

32. Apparatus (1) according to any one of claims from 21 to 31, comprising a tape feeding group (400) arranged upstream of said annular wheel (21) to pull the reinforcement tape (200) from a tape collection reel (300) and feed it to said annular wheel (21).

33. Apparatus (1) according to claim 32 when depending on claim 26, wherein said tape feeding group (400) comprises a guide member (413) of said reinforcement tape (200) in said tape inlet zone.

34. Apparatus (1) according to claim 33 when depending on claim 23, wherein said guide member (413) comprises a fourth roller (413) arranged in a position which is tangential to an envelope of said first rollers (30) during the rotation of said annular wheel (21) about the respective rotational axis.

35. Apparatus (1) according to any one of claims from 13 to 34, further comprising a cutting device (500, 501) of said reinforcement tape (200).

## Patentansprüche

1. Verfahren zum Herstellen einer ringförmigen Verankerungsstruktur eines Reifens für Fahrzeugräder mit den Schritten des:
- Herstellens eines Wulstkerns (100);
- Beschichtens des Wulstkerns (100) mit einem Verstärkungsband (200);
wobei der Schritt des Beschichtens des Wulstkerns (100) als Schritte aufweist:
- das Wickeln des Verstärkungsbands (200) um den Wulstkern (100) durch Bewegen eines Bandabgabeelements (20, 21) bezüglich des Wulstkerns (100);
- das Laden des Verstärkungsbands (200) auf das Bandabgabeelement (20, 21), wobei der Ladeschritt gleichzeitig mit wenigstens einem Teil des Schritts des Wickelns des Verstärkungsbands (200) um den Wulstkern (100) ausgeführt wird, wobei die Schritte des Wickelns des Verstärkungsbands (200) um den Wulstkern (100) und des Ladens des Verstärkungsbands (200) auf das Bandabgabeelement (20, 21) gleichzeitig durch die gleiche Drehbewegung des Bandabgabeelements (20, 21) um eine jeweilige Drehachse verursacht werden;
wobei der Schritt des Beschichtens des Wulstkerns (100) ferner einen Schritt des Zuordnens eines losen Endes des Verstärkungsbands (200) zu einem Querschnitt (101) des Wulstkerns (100) aufweist, bevor die obigen Wickel- und Ladeschritte begonnen werden.

2. Verfahren nach Anspruch 1, bei dem der Schritt des Ladens des Verstärkungsbands (200) auf das Bandabgabeelement (20, 21) während eines Teils des Schritts des Wickelns des Verstärkungsbands (200) um den Wulstkern (100) ausgeführt wird.

3. Verfahren nach einem der vorherigen Ansprüche, bei dem der Schritt des Ladens des Verstärkungsbands (200) auf das Bandabgabeelement (20, 21) den Schritt des allmählichen Abziehens des Verstärkungsbands (200) von einer Bandsammelspule (300) aufweist.

4. Verfahren nach Anspruch 3, ferner mit dem Schritt des Schneidens des Verstärkungsbands (200), um somit das Anziehen von der Bandsammelspule (300) zu unterbrechen.

5. Verfahren nach Anspruch 4, bei dem der Schritt des Schneidens des Verstärkungsbands (200) ausgeführt wird, nachdem das Bandabgabeelement (20, 21) eine vorher festgelegte Anzahl an Drehungen um die zugehörige Drehachse ausgeführt hat.

6. Verfahren nach Anspruch 4 oder 5, ferner mit dem Schritt des Wickelns des Verstärkungsbands (200), das auf das Bandabgabeelement (20, 21) geladen wurde und das noch nicht auf den Wulstkern (100) abgegeben ist, um den Wulstkern (100) nach dem Schritt des Schneidens des Verstärkungsbands (200).

7. Verfahren nach einem der vorherigen Ansprüche, bei dem der Schritt des Beschichtens des Wulstkerns (100) den Schritt des Positionierens des Wulstkerns (100) in Bezug auf das Bandabgabeelement (20, 21) in einer solchen Art aufweist, dass ein Querschnitt (101) des Wulstkerns (100) an einer Drehachse des Bandabgabeelements (20, 21) angeordnet ist.

8. Verfahren nach Anspruch 7, bei dem der Schritt des Beschichtens des Wulstkerns (100) ferner den Schritt des gleichzeitigen Bewegens des Bandabgabeelements (20, 21) um die Drehachse und des Wulstkerns (100) um eine zugehörige Drehachse aufweist, um so das Verstärkungsband (200) um den Wulstkern (100) zu wickeln und gleichzeitig das Verstärkungsband (200) um das Bandabgabeelement (20, 21) zu wickeln.

9. Verfahren nach Anspruch 7 oder 8, bei dem das Bandabgabeelement (20, 21) ein motorbetriebenes Rad (21) mit einer Öffnung (22) aufweist, um das Positionieren des Wulstkerns (100) bezüglich des Bandabgabeelements (20, 21) bei dem Schritt des Anordnens des Wulstkerns (100) bezüglich des Bandabgabeelements (20, 21) zu ermöglichen.

10. Verfahren nach Anspruch 8 oder 9, bei dem während des Schritts des gleichzeitigen Bewegens des Bandabgabeelements (20, 21) und des Wulstkerns (100) das Bandabgabeelement (20, 21) mit einer ersten vorher festgelegten Drehgeschwindigkeit um die zugehörige Drehachse bewegt wird und der Wulstkern (100) mit einer zweiten vorher festgelegten Drehgeschwindigkeit um eine zugehörige Drehachse bewegt wird.

11. Verfahren nach Anspruch 10, bei dem während des Schritts des gleichzeitigen Bewegens des Bandabgabeelements (20, 21) und des Wulstkerns (100) die erste und zweite vorher festgelegten Drehgeschwindigkeiten konstant gehalten werden.

12. Verfahren zum Herstellen eines Reifens mit einer Karkassenstruktur, die wenigstens eine Karkassenlage aufweist, die axial gegenüberliegenden ringförmigen Verankerungsstrukturen zugeordnet ist, wobei das Verfahren als Schritte aufweist:
- das Herstellen wenigstens eines Paars ringförmiger Verankerungsstrukturen der Karkassenstrnktur nach Anspruch 1;
- das Zuordnen des Paars ringförmiger Verankerungsstrukturen zu der wenigstens einen Karkassenlage an axial gegenüberliegenden Endwulstbändern der Karkassenlage.

13. Vorrichtung (1) zum Herstellen einer ringförmigen Verankerungsstruktur für einen Reifen für Fahrzeugräder mit einer Einrichtung (10) zum Lagern des Wulstkerns (100) und mit einem Bandabgabeelement (20, 21), das bezüglich der Wulstkernlagereinrichtung (10) beweglich ist, um ein Verstärkungsband (200) um einen Wulstkern (100) zu wickeln, wobei während des Wickelns des Verstärkungsbands (200) um den Wulstkern (100) das Bandabgabeelement (20, 21) auch als ein Bandladeelement wirkt, wobei die Vorrichtung (1) ferner eine Drückeinrichtung zum Zuordnen eines losen Endes des Verstärkungsbands (200) zu einem Querschnitt (101) des Wulstkerns (100) vor dem Beginnen mit den oben genannten Wickel- und Ladeschritten aufweist.

14. Vorrichtung (1) nach Anspruch 13, bei dem die Wulstkernlagereinrichtung (10) wenigstens eine Wulstkernlagerrolle (11) aufweist, die dafür angepasst ist, auf einen inneren ringförmigen Oberflächenabschnitt des Wulstkerns (100) einzuwirken, um den Wulstkern (100) in Bezug auf das Bandabgabeelement (20, 21) zu lagern.

15. Vorrichtung (1) nach Anspruch 14, bei dem die Wulstkernlagereinrichtung (10) ferner wenigstens eine Wulstkernarretierrolle (12) aufweist, die im Wesentlichen parallel zu der wenigstens einen Wulstkernlagerrolle (11) ist, die dafür angepasst ist, mit der wenigstens einen Wulstkernlagerrolle (11) zusammenzuwirken, um den Wulstkern (100) in Bezug auf das Bandabgabeelement (20, 21) in einer Position zu arretieren.

16. Vorrichtung (1) nach Anspruch 14 oder 15, bei dem die Wulstkernlagereinrichtung (10) wenigstens eine seitliche Wulstkernlagerrolle (13) aufweist, die in Bezug auf die wenigstens eine Wulstkernlagerrolle (11) in einer solchen Position angeordnet ist, dass sie für den Wulstkern (100) für eine seitliche Lagerung eines an einer Seite angeordneten Seitenoberflächenabschnitts (102) des Wulstkerns (100) sorgt, die axial dem inneren ringförmigen Oberflächenabschnitt des Wulstkerns (100), der durch die wenigstens eine Wulstkernlagerrolle (11) gelagert ist, gegenüberliegt.

17. Vorrichtung (1) nach einem der Ansprüche 13 bis 16 mit einer ersten Steuergruppe (25, 26, 27a, 27b) der Drehung des Bandabgabeelements (20, 21) um eine zugehörige Drehachse.

18. Vorrichtung (1) nach Anspruch 17, bei dem die erste Steuergruppe (25, 26, 27a, 27b, 28) einen Elektromotor (25) und ein erstes Bewegungstransmissionselement (26, 27a, 27b, 28) zwischen dem Elektromotor (25) und dem Bandabgabeelement (20, 21) aufweist.

19. Vorrichtung (1) nach einem oder mehreren der Ansprüche 13 bis 18 mit einer zweiten Steuergruppe (25, 14, 15) der Drehung des Wulstkerns (100) um eine zugehörige Drehachse.

20. Vorrichtung (1) nach Anspruch 19, sofern von Ansprüche 14 und 18 abhängig, bei der die zweite Steuergruppe (25, 14, 15) ein zweites Bewegungstransmissionselement (14, 15) von dem Elektromotor (25) zu dem wenigstens einen Wulstkernlagerrolle (11) aufweist.

21. Vorrichtung (1) nach einem der Ansprüche 13 bis 20, bei der das Bandabgabeelement (20, 21) ein ringförmiges Rad (21) mit einer Öffnung (22) aufweist, um das Anordnen eines Querschnitts (101) des Wulstkerns (100) innerhalb des ringförmigen Rads (21) zu ermöglichen.

22. Vorrichtung (1) nach Anspruch 21, sofern von Anspruch 14 abhängig, bei dem die wenigstens eine Wulstkernlagerrolle (11) innerhalb des ringförmigen Rads (21) so angeordnet ist, dass sie den Querschnitt (101) des Wulstkerns (100) an einer Drehachse des ringförmigen Rads (21) anordnet.

23. Vorrichtung (1) nach Anspruch 21 oder 22, bei dem das Bandabgabeelement (20, 21) mehrere erste Rollen (30) aufweist, die dem ringförmigen Rad (21) zugeordnet sind.

24. Vorrichtung (1) nach Anspruch 23, bei dem die ersten Rollen (30) eine nach der anderen entlang eines ersten Umfangs des ringförmigen Rads (21) angeordnet sind.

25. Vorrichtung (1) nach Anspruch 24, bei dem die ersten Rollen (30) jeweilige Drehachsen aufweisen, die im Wesentlichen parallel zu der Drehachse des ringförmigen Rads (21) sind.

26. Vorrichtung (1) nach einem der Ansprüche 21 bis 25, ferner mit einer zweiten Rolle (31), die dem ringförmigen Rad (21) an einer Bandeinlasszone von diesem zugeordnet ist.

27. Vorrichtung (1) nach Anspruch 26, bei dem die zweite Rolle (31) eine jeweilige Drehachse aufweist, die um einen vorher festgelegten Winkel mit Bezug auf die Drehachse des ringförmigen Rads (21) geneigt ist.

28. Vorrichtung (1) nach Anspruch 26 oder 27, bei dem die Bandeinlasszone innerhalb des ringförmigen Rads (21) an der Öffnung (22) definiert ist.

29. Vorrichtung (1) nach Anspruch 26 oder 27, bei dem die Bandeinlasszone in dem ringförmigen Rad (21) an der axial gegenüberliegenden Seite mit Bezug auf die Öffnung (22) definiert ist.

30. Vorrichtung (1) nach einem der Ansprüche 24 bis 29, ferner mit einem Lagerrahmen (210) des ringförmigen Rads (21) und mit mehreren dritten Rollen (220), die dem Rahmen (210) an einem zweiten Umfang außerhalb des ersten Umfangs zugeordnet sind.

31. Vorrichtung (1) nach Anspruch 30, bei dem die dritten Rollen (220) jeweilige Drehachsen aufweisen, die im Wesentlichen parallel zu der Drehachse des ringförmigen Rads (21) sind.

32. Vorrichtung (1) nach einem der Ansprüche 21 bis 31 mit einer Bandzuführgruppe (400), die dem ringförmigen Rad (21) vorgelagert angeordnet ist, um das Verstärkungsband (200) von einer Bandsammelspule (300) abzuziehen und es dem ringförmigen Rad (21) zuzuführen.

33. Vorrichtung (1) nach Anspruch 32, sofern von Anspruch 26 abhängig, bei der die Bandzuführgruppe (400) ein Leitelement (413) für das Verstärkungsband (200) in der Bandeinlasszone aufweist.

34. Vorrichtung (1) nach Anspruch 33, sofern von Anspruch 23 abhängig, bei dem das Leitelement (413) eine vierte Rolle (413) aufweist, die an einer Position angeordnet ist, die tangential zu einer Hüllkurve der ersten Rollen (30) während der Drehung des ringförmigen Rads (21) um die jeweilige Drehachse ist.

35. Vorrichtung (1) nach einem der Ansprüche 13 bis 34, ferner mit einer Schneideeinrichtung (500, 501) für das Verstärkungsband (200).

## Revendications

1. Procédé de fabrication d'une structure d'ancrage annulaire d'un pneu pour roues de véhicule, comportant les étapes suivantes :
- fabrication d'une tringle de talon (100) ;
- revêtement de ladite tringle (100) avec une bande de renfort (200) ; dans lequel l'étape de revêtement de la tringle (100) comporte les étapes suivantes:
- enroulement de ladite bande de renfort (200) sur ladite tringle (100) en déplaçant un organe de dépôt de bande (20, 21), par rapport à ladite tringle (100) ;
- chargement de ladite bande de renfort (200) sur ledit organe de dépôt de bande (20, 21), ladite étape de chargement étant réalisée simultanément avec au moins une partie de l'étape d'enroulement de ladite bande de renfort (200) sur ladite tringle (100), dans lequel les étapes d'enroulement de ladite bande de renfort (200) sur la tringle (100) et de chargement de la bande de renfort (200) sur le organe de dépôt de bande (20, 21) sont simultanément causées par le même mouvement de rotation dudit organe de dépôt de bande (20, 21) autour d'un axe de rotation respectif ;
l'étape de revêtement de la tringle (100) comportant en outre une étape d'association d'une extrémité libre de ladite bande de renfort (200) avec une section transversale (101) de ladite tringle (100) avant de débuter les étapes d'enroulement et de chargement susmentionnées.

2. Procédé selon la revendication 1, dans lequel l'étape de chargement de la bande de renfort (200) sur ledit organe de dépôt de bande (20, 21) est réalisée lors d'une première partie de l'étape d'enroulement de ladite bande de renfort (200) sur ladite tringle (100).

3. Procédé selon l'une quelconque des revendications précédentes, dans lequel l'étape de chargement de la bande de renfort (200) sur ledit organe de dépôt de bande (20, 21) comporte l'étape de tirer continument la bande de renfort (200) à partir d'une bobine de stockage de bande (300).

4. Procédé selon la revendication 3, comportant en outre l'étape de coupe de la bande de renfort (200) de manière à Interrompre le tirage à partir de ladite bobine de stockage de bande (300).

5. Procédé selon la revendication 4, dans lequel l'étape de coupe de la bande de renfort (200) est effectuée après que ledit organe de dépôt de bande (20, 21) ait réalisé un nombre prédéterminé de révolutions autour de l'axe de rotation respectif.

6. Procédé selon la revendication 4 ou 5, comportant en outre, après l'étape de coupe de la bande de renfort (200), l'étape d'enroulement sur ladite tringle (100) de la bande de renfort (200) chargée sur ledit organe de dépôt de bande (20, 21) et non encore déposée sur la tringle (100).

7. Procédé selon l'une quelconque des revendications précédentes, dans lequel l'étape de revêtement de la tringle (100) comporte l'étape de positionnement de ladite tringle (100) par rapport au dit organe de dépôt de bande (20, 21) de telle manière qu'une section transversale (101) de ladite tringle (100) est placée à un axe de rotation dudit organe de dépôt de bande (20, 21).

8. Procédé selon la revendication 7, dans lequel l'étape de revêtement de la tringle (100) comporte en outre l'étape de déplacer simultanément ledit organe de dépôt de bande (20, 21) autour dudit axe de rotation et de ladite tringle (100) autour d'un axe de rotation respectif afin d'enrouler ladite bande de renfort (200) sur ladite tringle (100) et d'enrouler simultanément ladite bande de renfort (200) sur ledit organe de dépôt de bande (20, 21).

9. Procédé selon la revendication 7 ou 8, dans lequel ledit organe de dépôt de bande (20, 21) comporte une roue motorisée (21) ayant une ouverture (22) pour permettre le positionnement de ladite tringle (100) par rapport au dit organe de dépôt de bande (20, 21) dans ladite étape de positionnement de ladite tringle (100) par rapport au dit organe de dépôt de bande (20, 21).

10. Procédé selon la revendication 8 ou 9, dans lequel dans ladite étape de déplacement simultané du organe de dépôt de bande (20, 21) et de la tringle (100), le organe de dépôt de bande (20, 21) est déplacé à une première vitesse de rotation prédéterminée autour de l'axe de rotation respectif, et la tringle (100) est déplacée à une deuxième vitesse de rotation prédéterminée autour d'un axe de rotation respectif.

11. Procédé selon la revendication 10, dans lequel dans ladite étape de déplacement simultané de l'organe de dépôt de bande (20, 21) et de la tringle (100), lesdites première et deuxième vitesses de rotation prédéterminées sont maintenues constantes.

12. Procédé de fabrication d'un pneu comportant une structure de carcasse ayant au moins un nappe de carcasse associée avec des structures d'ancrage annulaires axialement opposées, ledit procédé comportant les étapes suivantes :
- fabriquer au moins une paire de structures d'ancrage annulaires de ladite structure de carcasse selon la revendication 1,
- associer ladite paire de structures d'ancrage annulaires avec ladite au moins une nappe de carcasse à des rabats d'extrémité de la nappe de carcasse, opposés axialement.

13. Appareil (1) pour la fabrication d'une structure d'ancrage annulaire pour un pneu pour roues de véhicule, comportant un dispositif (10) pour soutenir la tringle (100) et un organe de dépôt de bande (20, 21) déplaçable par rapport au dit dispositif (10) pour soutenir la tringle pour enrouler une bande de renfort (200) sur une tringle (100), dans lequel lors de l'enroulement de la bande de renfort (200) sur la tringle (100) ledit organe de dépôt de bande (20, 21) agit également comme un organe de chargement de bande, l'appareil (1) comportant en outre un dispositif presseur pour associer une extrémité libre de ladite bande de renfort (200) avec une section transversale (101) de ladite tringle (100) avant de débuter les étapes d'enroulement et de chargement susmentionnées.

14. Appareil (1) selon la revendication 13, dans lequel ledit dispositif (10) de soutien de tringle comporte au moins un galet de soutien de tringle (11) adapté pour agir sur une partie de surface annulaire intérieure de ladite tringle (100) pour soutenir ladite tringle (100) par rapport au dit organe de dépôt de bande (20, 21).

15. Appareil (1) selon la revendication 14, dans lequel ledit dispositif (10) de soutien de tringle comporte en outre au moins un galet de verrouillage de tringle (12) sensiblement parallèle au dit au moins un galet de soutien de tringle (11), apte à coopérer avec ledit au moins un galet de soutien de tringle (11) pour verrouiller en position ladite tringle (100) par rapport au dit organe de dépôt de bande (20, 21).

16. Appareil (1) selon la revendication 14 ou 15, dans lequel ledit dispositif (10) de soutien de tringle comporte en outre au moins un galet de soutien de tringle latéral (13) positionné par rapport au dit au moins un galet de soutien de tringle (11) dans une position propre à pour fournir à la tringle (100) un appui latéral pour une partie de surface latérale (102) de ladite tringle (100) disposée en un côté axialement opposé à la partie de surface annulaire Intérieure de ladite tringle (100) soutenue par ledit au moins un galet de soutien de tringle (11).

17. Appareil (1) selon l'une quelconque des revendications 13 à 16, comportant un premier groupe de commande en rotation (25, 26, 27a, 27b) dudit organe de dépôt de bande (20, 21) autour d'un axe de rotation respectif.

18. Appareil (1) selon la revendication 17, dans lequel ledit premier groupe de commande (25, 26, 27a, 27b, 28) comporte un moteur électrique (25) et des premiers organes de transmission du mouvement (26, 27a, 27b, 28) entre ledit moteur électrique (25) et ledit organe de dépôt de bande (20, 21).

19. Appareil (1) selon une au moins des revendications 13 à 18, comportant un deuxième groupe de commande en rotation (25, 14, 15) de ladite tringle (100) autour d'un axe de rotation respectif.

20. Appareil (1) selon la revendication 19 lorsqu'elle dépend des revendications 14 et 18, dans lequel ledit deuxième groupe de commande (25, 14, 15) comporte des deuxièmes organes de transmission du mouvement (14, 15) depuis ledit moteur électrique (25) vers ledit au moins un galet de soutien de tringle (11).

21. Appareil (1) selon l'une quelconque des revendications 13 à 20, dans lequel ledit organe de dépôt de bande (20, 21) comporte une roue annulaire (21) ayant une ouverture (22) pour permettre le positionnement d'une section transversale (101) de ladite tringle (100) à l'intérieur de ladite roue annulaire (21).

22. Appareil (1) selon la revendication 21 lorsqu'elle dépend de la revendication 14, dans lequel ledit au moins un galet de soutien de tringle (11) est disposé à l'intérieur de ladite roue annulaire (21) de façon à positionner ladite section transversale (101) de ladite tringle (100) en un axe de rotation de ladite roue annulaire (21).

23. Appareil (1) selon la revendication 21 ou 22, dans lequel ledit organe de dépôt de bande (20, 21) comporte plusieurs premiers galets (30) associés à ladite roue annulaire (21).

24. Appareil (1) selon la revendication 23, dans lequel lesdits premiers galets (30) sont disposés l'un après l'autre le long d'une première circonférence de ladite roue annulaire (21).

25. Appareil (1) selon la revendication 24, dans lequel lesdits premiers galets (30) ont des axes de rotation respectifs sensiblement parallèles à l'axe de rotation de la roue annulaire (21).

26. Appareil (1) selon l'une quelconque des revendications 21 à 25, comportant en outre un deuxième galet (31) associé avec ladite roue annulaire (21) à une zone d'entrée de bande de celle-ci.

27. Appareil (1) selon la revendication 26, dans lequel ledit deuxième galet (31) comporte un axe de rotation respectif incliné d'un angle prédéterminé par rapport à l'axe de rotation de ladite roue annulaire (21).

28. Appareil (1) selon la revendication 26 ou 27, dans lequel ladite zone d'entrée de bande est définie dans ladite roue annulaire (21) à ladite ouverture (22).

29. Appareil (1) selon la revendication 26 ou 27, dans lequel ladite zone d'entrée de bande est définie dans ladite roue annulaire (21) sur le côté axialement opposé par rapport à ladite ouverture (22).

30. Appareil (1) selon l'une quelconque des revendications de 24 à 29, comportant en outre un châssis de support (210) de ladite roue annulaire (21) et plusieurs troisièmes galets (220) associés au dit châssis (210) à une deuxième circonférence extérieure à ladite première circonférence.

31. Appareil (1) selon la revendication 30, dans lequel lesdits troisièmes galets (220) ont des axes de rotation respectifs sensiblement parallèles à l'axe de rotation de ladite roue annulaire (21).

32. Appareil (1) selon l'une quelconque des revendications 21 à 31, comportant un groupe d'alimentation en bande (400) disposé en amont de ladite roue annulaire (21) pour tirer la bande de renfort (200) à partir d'une bobine de stockage de bande (300) et en alimenter ladite roue annulaire (21).

33. Appareil (1) selon la revendication 32 lorsqu'elle dépend de la revendication 26, dans lequel ledit groupe d'alimentation en bande (400) comporte un organe de guidage (413) de ladite bande de renfort (200) dans ladite zone d'entrée de bande.

34. Appareil (1) selon la revendication 33 lorsqu'elle dépend de la revendication 23, dans lequel ledit organe de guidage (413) comporte un quatrième galet (413) disposé dans une position qui est tangente à une enveloppe desdits premiers galets (30) pendant la rotation de ladite roue annulaire (21) autour de l'axe de rotation respectif.

35. Appareil (1) selon l'une quelconque des revendications 13 à 34, comportant en outre un dispositif de coupe (500, 501) de ladite bande de renfort (200).
